# EUROPÄISCHE PATENTSCHRIFT

(11) **EP 1 050 100 B1**
(45) Veröffentlichungstag und Bekanntmachung des Hinweises auf die Patenterteilung: **20.08.2008**
(21) Anmeldenummer: 99950444.2
(22) Anmeldetag: 28.07.1999
(51) Int. Cl.: H02P 9/30, H02J 7/14, B60R 16/02

(54) **MEHRSPANNUNGSBORDNETZ FÜR EIN FAHRZEUG**
MULTI-VOLTAGE VEHICLE ELECTRIC SYSTEM
RESEAU DE BORD A TENSION MULTIPLE POUR VEHICULE

(30) Priorität: 27.08.1998 DE 19838973
(43) Veröffentlichungstag der Anmeldung: 08.11.2000
(73) Patentinhaber: ROBERT BOSCH GMBH, 70442 Stuttgart (DE)
(72) Erfinder: KOELLE, Gerhard, D-75446 Wiernsheim (DE); GEIGER, Albert, D-71735 Eberdingen (DE)
(86) Internationale Anmeldenummer: PCT/DE1999/002315
(87) Internationale Veröffentlichungsnummer: WO 2000/013303

(56) Entgegenhaltungen:
- EP-A- 0 372 819
- US-A- 4 686 442

## Beschreibung

### Stand der Technik

Die Erfindung betrifft ein Mehrspannungsbordnetz für ein Fahrzeug nach der Gattung des Hauptanspruchs.

Es ist bekannt, daß in einem Kraftfahrzeug-Bordnetz, in dem die für die elektrischen Verbraucher benötigte Versorgungsspannung mittels eines Generators erzeugt wird, mehr als eine Versorgungsspannung vom Generator geliefert werden sollte, damit eine zuverlässige komponentenspezifische Versorgung gewährleistet ist. Ein Kraftfahrzeug-Bordnetz, bei dem mehrere unterschiedliche Versorgungsspannungen bereitgestellt werden, ist aus der DE-OS 195 19 298 bekannt. Bei einem solchen bekannten Fahrzeug-Bordnetz wird die elektrische Energie mit Hilfe eines Drehstromgenerators erzeugt. Die entstehende Spannung wird mit Hilfe zweier Gleichrichterbrücken, die an verschiedenen Stellen der Phasenwicklung des Generators angeschlossen sein können, in zwei unterschiedliche Gleichspannungen gewandelt. Als Gleichrichter werden bei einigen bekannten Ausführungsformen Thyristoren eingesetzt. Zusätzlich zur Gleichrichtung werden Feldeffekttransistoren eingesetzt, mit deren Hilfe eine Laststrombegrenzung durchgeführt wird. Die Feldeffekttransistoren werden dazu elektrisch gesehen nach den Gleichrichterbrücken eingesetzt. Sie stehen mit den jeweiligen Spannungsabgriffen, an denen die unterschiedlichen Bordnetzspannungen abgreifbar sind, in Verbindung.

### Vorteile der Erfindung

Das erfindungsgemäße Mehrspannungsbordnetz für ein Fahrzeug mit den Merkmalen des Anspruchs 1 hat den Vorteil, daß aus den Phasenspannungen des Generators wenigstens zwei unterschiedliche Gleichspannungen erzeugt werden können und daß gleichzeitig verhindert wird, daß sich die beiden Spannungsebenen gegenseitig negativ beeinflussen.

Erzielt werden diese Vorteile, indem zwei Gleichrichteranordnungen mit den Phasenwicklungen des Generators verbunden werden und eine der Gleichrichteranordnungen mit Hilfe von steuerbaren Gleichrichterelementen aufgebaut wird, insbesondere unter Verwendung von sechs MOS-Feldeffekttransistoren, von denen jeweils zwei zueinander in Reihe geschaltet sind und zwischen jeweils einer Phasenwicklung und dem gemeinsamen Anschluß B+ liegen. Die andere Gleichrichteranordnung, an der die höhere Spannung abgreifbar ist, entspricht der herkömmlichen Anordnung von Plus- und Minusdioden zwischen den Phasenwicklungen des Generators und dem Anschluß B2+.

Weitere Vorteile der Erfindung werden durch die in den Unteransprüchen angegebenen Maßnahmen erzielt. So ist es beispielsweise vorteilhaft, die Generatorregelung so durchzuführen, daß sich an einem Spannungsabgriff eine Spannung von 12 bzw. 14V einstellt, während am anderen Spannungsabgriff 36 bzw. 42V liegen. Vorteilhafterweise werden auch die Gleichrichterelemente der Gleichrichteranordnung, die zwischen dem Generator und B+ liegt, als MOS-Feldeffekttransistoren ausgebildet. Die Ansteuerung der Feldeffekttransistoren wird in vorteilhafter Weise vom Spannungsregler oder von einer Steuer- und Regeleinheit bewerkstelligt, die auch für die Regelung des Erregerstromes zuständig ist.

Besonders vorteilhaft läßt sich die Erfindung in Verbindung mit einer elektrischen Maschine einsetzen, die sowohl als Motor (Starter) als auch als Generator arbeiten kann. In diesem Fall können die MOS-Feldeffekttransistoren je nach Betriebszustand als steuerbare Gleichrichter oder als steuerbare Wechselrichter arbeiten, wobei die elektrische Maschine im Motorbetrieb als Asynchron- oder als Synchronmotor betrieben werden kann und von einer Batterie über die als steuerbare Wechselrichter arbeitenden Feldeffekttransistoren versorgt werden kann.

In einer weiteren vorteilhaften Ausgestaltung werden zusätzliche Gleichrichteranordnungen eingesetzt, die noch eine weitere Gleichspannung liefern. Die mit dem Anschluß B1+ verbundenen Gleichrichterelemente können auch so aufgebaut sein, daß je eine Diode pro Phase eingesetzt wird, wobei die Anode an der jeweiligen Phasenwicklung angeschlossen ist und die Kathoden gemeinsam mit einem dazu in Reihe geschalteten Feldeffekttransistor verbunden sind, der als steuerbares Stellglied wirkt. Wird pro Phasenwicklung ein Feldeffekttransistor verwendet, kann eine Beschaltung derart vorgenommen werden, daß die Anode der parasitären Diode an der jeweiligen Phasenwicklung angeschlossen wird und die Kathoden der parasitären Diode gemeinsam mit einem dazu in Reihe geschalteten Feldeffekttransistor verbunden sind, der wiederum als steuerbares Stellglied wirkt.

Bei der Regelung des Generators können in vorteilhafter Weise die Leistungsschalter so angesteuert werden, daß die vorgegebenen Spannungswerte an den beiden Anschlüssen B1+ und B2+ jeweils unabhängig von der jeweiligen Netzlast und der Generatordrehzahl einstellbar sind.

### Zeichnung

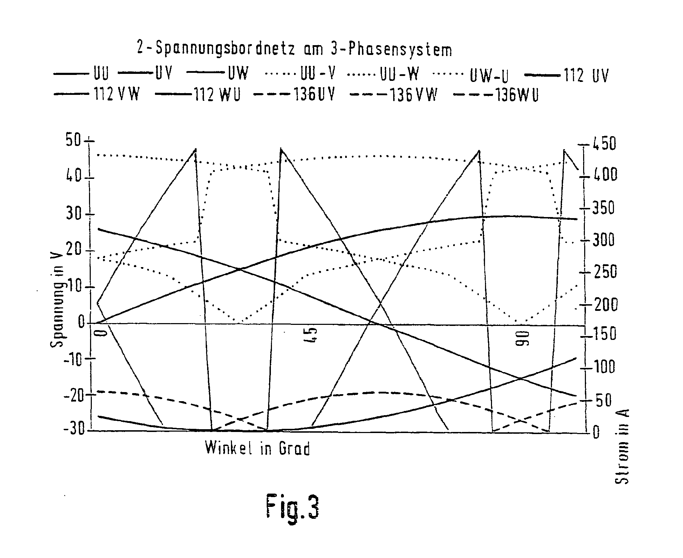

Zwei Ausführungsbeispiele der Erfindung sind in der Zeichnung dargestellt und werden in der nachfolgenden Beschreibung näher erläutert. Zusätzlich sind in Figur 3 der Zeichnung noch Strom-Spannungsverläufe bei Speisung eines Drei-Phasengenerators über je einen gesteuerten Gleichrichter in zwei Netze mit den Nennspannungen 12V und 36V dargestellt.

### Beschreibung

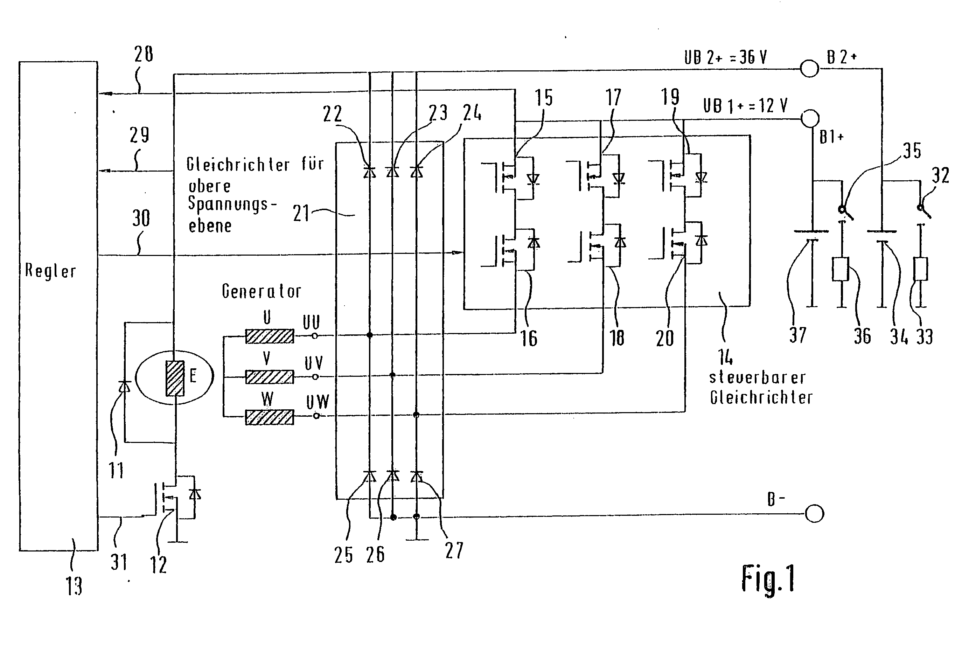

In Fig. 1 ist ein erstes Ausführungsbeispiel der Erfindung dargestellt, bei dem der Generator, der die zur Versorgung des Bordnetzes benötigten Spannungen liefert, mit 10 bezeichnet ist. Der Generator 10 ist beispielsweise ein fremderregter Synchrongenerator mit zwei Spannungsausgängen B1+ und B2+, an denen die Spannungen UB1+ und UB2+ entstehen. Vom Generator selbst sind die Phasenwicklungen U, V und W dargestellt, die als Stern verschaltet sind. An den Phasenwicklungen entstehen die Spannungen UU, UV und UW. Die Erregerwicklung des Generators 10 ist mit E bezeichnet. Parallel zur Erregerwicklung E liegt eine Freilaufdiode 11. Die Erregerwicklung E liegt zwischen dem Anschluß B1+ und einem Regeltransistor 12, beispielsweise einem Feldeffekttransistor, der auf der von der Erregerwicklung entfernten Seite auf Masse liegt. Angesteuert wird der Regeltransistor 12 vom Spannungsregler 13. Dem Spannungsregler 13, der durch Ansteuerungen des Regeltransistors 12 den Strom durch die Erregerwicklung E beeinflußt und damit die Ausgangsspannung des Generators 10 regelt, werden zusätzlich die Spannungen UP1+ und UP2+ zugeführt, die er bei der Spannungsregelung als Ist-Spannungen berücksichtigen kann.

An die Phasenwicklungen U, V und W des Generators 10 schließen sich zwei Gleichrichteranordnungen an, die ihrerseits noch Bestandteil des Generators 10 sind. Die erste Gleichrichteranordnung 14 ist als steuerbarer Gleichrichter aufgebaut und umfaßt sechs steuerbare Gleichrichterelemente, beispielsweise die Feldeffekttransistoren 15-20. Die Verschaltung der Feldeffekttransistoren ist dabei so, daß jeweils zwei zueinander in Reihe liegen und diese Reihenschaltung zwischen einer Phasenwicklung des Generators und dem Anschluß B1+ liegt.

Die zweite Gleichrichteranordnung ist mit 21 bezeichnet, sie ist in bekannter Weise als Plus- und Minusbrücke ausgebildet und umfaßt sechs Dioden 22-27, deren Verbindungspunkte jeweils mit einer Phasenwicklung des Generators verbunden sind. Die Anoden der Dioden der Minusbrücke liegen auf Masse bzw. am Generatoranschluß B-. Die Kathoden der Plus-Brücke sind mit dem Anschluß B2+, an dem die höhere Spannung UB2+ liegt, verbunden.

Die Ausgangsspannung des Generators bzw. die in den Phasenwicklungen U, V, W des Generators 10 entstehenden Spannungen werden mit Hilfe der beiden Gleichrichteranordnungen 14 und 21 gleichgerichtet. Die Regelung der Höhe der Ausgangsspannungen des Generators erfolgt über die Beeinflussung des Erregerstromes IE, der vom Spannungsregler 13 geregelt wird. Mit der in Fig. 1 dargestellten Schaltungsanordnung wird der Generator so geregelt, daß am Ausgang B2+ die Ausgangsspannung UB2+ entsteht, die beispielsweise 36V beträgt. Diese Spannung steht für Verbraucher zur Verfügung, die eine große Leistungsaufnahme aufweisen und in der so bezeichneten oberen Spannungsebene versorgt werden sollen. Durch geeignete Ansteuerung des steuerbaren Gleichrichters 14, beispielsweise durch Ansteuerung der Feldeffekttransistoren vom Spannungsregler 13 aus läßt sich die Spannung am Anschluß B1+ so einregeln, daß die Spannung UB1=12V (Nennspannung) beträgt. Sowohl die Regelung des Generators auf UB2+ als auch die Ansteuerung der steuerbaren Gleichrichter 14 werden dabei vom Spannungsregler in Abhängigkeit von den ihm über entsprechende Verbindungen 28, 29 zugeführten Spannungsistwert durchgeführt. Die Ansteuerungen vom Spannungsregler 13 erfolgen über die Verbindungen 30 bzw. 31.

Während die Verbraucher 33, die mit der höheren Spannung versorgt werden sollen, über Schalter 32 an den Anschluß B2+ schaltbar sind, an dem gegebenenfalls auch noch ein Ladungsspeicher, beispielsweise eine Batterie 34 oder ein Kondensator angeschlossen ist, lassen sich Bordnetzverbraucher 36, die 12V benötigen, über den Schalter 35 an den Anschluß B1+ legen. An B1+ ist üblicherweise die Bordnetzbatterie 37 angeschlossen.

Die beiden Spannungen von 12V (untere Spannungsebene) bzw. 36V (obere Spannungsebene) entsprechen Nennspannungen, die zugehörigen Ladespannungen sind demzufolge 14V bzw. 42V. Mit der höheren Spannung werden beispielsweise die elektrische Wasserpumpe, die elektrische Lenkung, ein elektrischer Ventiltrieb, elektrische Scheibenheizungen o. ä. betrieben. Die 12V-Verbraucher sind die bekannten elektrischen Verbraucher in einem Kraftfahrzeugbordnetz.

Bei dem in Fig. 1 dargestellten Ausführungsbeispiel der Erfindung wird die höhere Ausgansspannung UB2+ des Generators über die Regelung des Erregerstromes bzw. der Erregerleistung geregelt. Über die steuerbare Gleichrichteranordnung 14 wird dagegen die sogenannte untere Spannungsebene am Anschluß UB1+ versorgt, indem beispielsweise synchron zum Phasenstrom IU bzw. IV bzw. IW zur Zeit der leitenden Periodendauer des oberen Gleichrichters 21 eingetaktet wird. Dadurch wird jeweils die obere Diode gesperrt und der Phasenstrom fließt in den unteren Kreis. Beim Ausschalten des steuerbaren Gleichrichters kommutiert der Phasenstrom wieder auf die obere Diode. Die vom Spannungsregler 13 durchgeführte Regelung regelt somit die Phasenlage und die Einzeit des steuerbaren Gleichrichters 14 auf die 12V der unteren Spannungsebene. Durch Wahl einer geeigneten Phasenlage des steuerbaren Gleichrichters 14 bzw. durch entsprechende Ansteuerung der MOS-Feldeffekttransistoren 15-20 des steuerbaren Gleichrichters 14 kann die Welligkeit der oberen Spannung positiv beeinflußt, d. h. verringert werden.

Der durch die beschriebenen Maßnahmen in der unteren Spannungsebene abgezweigte Strom führt, falls nicht die maximale Leistung des Generators 10 überschritten wird, zu keiner Reduzierung der oberen (höheren) Spannung UB2+, da diese weiterhin über die Erregerleistung ausgeregelt wird. Die Regelung der oberen Spannung wird also zumindest innerhalb bestimmter Grenzen durch Regelung der Erregerleistung unabhängig von Leistungsentnahmen am Anschluß B2+ durchgeführt.

Um beim Überschreiten der maximalen Leistung des Generators einen Spannungseinbruch auf der oberen Spannungsebene zu vermeiden, wird der maximal durchgesteuerte Phasenwinkel des steuerbaren Gleichrichters 14 als Funktion der Regelabweichung der oberen Spannungsebene begrenzt.

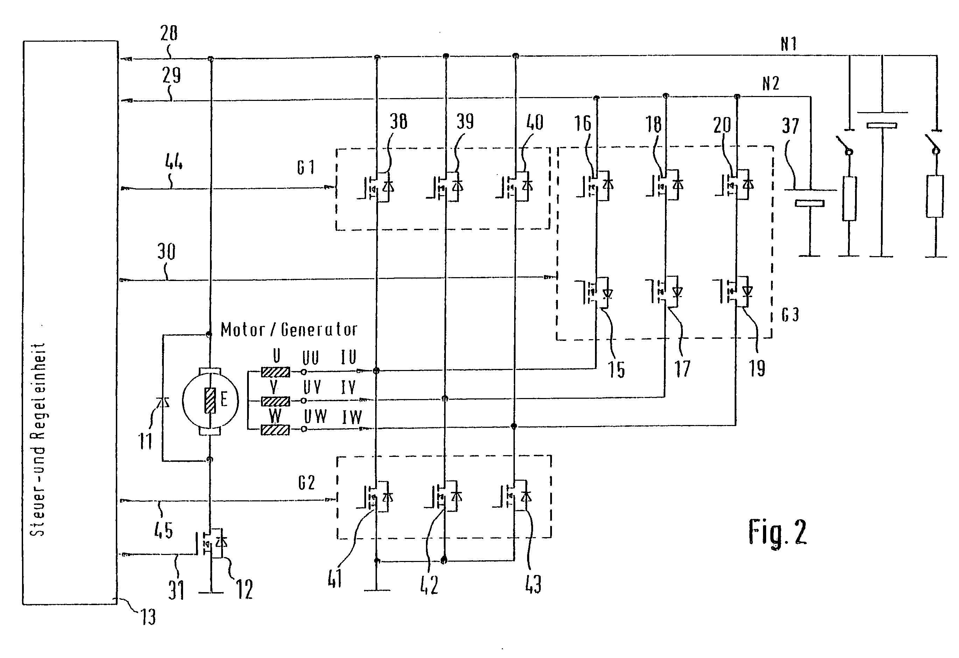

Die im Ausführungsbeispiel nach Fig. 1 dargestellte Schaltung verwendet im unteren Brückenzweig gemeinsame Gleichrichterdioden 25, 26 und 27. Der obere Zweig ist für die Ruhespannung mit Dioden 22, 23 und 24 ausgerüstet. Für die untere Spannungsebene sind dagegen je zwei in Reihe geschaltete MOS-Feldeffekttransistoren vorgesehen. Dadurch wird verhindert, daß sich zwischen den zwei Spannungsebenen ungeregelte Ausgleichströme bilden können. Anstelle der MOS-Feldeffekttransistoren 15-20 könnten auch andere steuerbare Gleichrichterelemente eingesetzt werden. Anstelle der Dioden 22-27 könnten beispielsweise Zenerdioden oder ebenfalls gesteuerte Gleichrichterelemente eingesetzt werden. In einer erweiterten Ausführungsform läßt sich der fremderregte Synchrongenerator ersetzen durch eine beliebige elektrische Maschine. Insbesondere läßt sich die Erfindung auch für eine elektrische Maschine, die als Motor- und/oder Generator betrieben werden kann, erweitern, wobei in diesem Fall die im folgenden erläuterte Ausführungsform nach Fig. 2 zu bevorzugen ist.

Im Ausführungsbeispiel nach Fig. 2, bei dem gleiche Bauteile wie beim Ausführungsbeispiel nach Fig. 1 mit denselben Bezugszeichen versehen sind, wird die Spannung mit Hilfe einer elektrischen Maschine 10a, die als Generator betreibbar ist und zusätzlich auch als Motor betrieben werden kann, erzeugt. Wie beim Ausführungsbeispiel nach Fig. 1 sind steuerbare Gleichrichter 15-20 vorhanden, die beim Ausführungsbeispiel nach Fig. 2 als Gruppe G3 bezeichnet sind. Die Dioden 22-27 sind ersetzt durch Feldeffekttransistoren 38-43, wobei die Feldeffekttransistoren 38, 39 und 40 als Gruppe G1 und die Feldeffekttransistoren 41, 42 und 43 als Gruppe G2 bezeichnet werden. Die beiden zugehörigen Spannungsnetze sind mit N1 und N2 bezeichnet, wobei das Netz N1 dem Anschluß B2+ entspricht und das Netz N2 dem Anschluß B1+. Die Feldeffekttransistoren 38-40 werden vom Spannungsregler 13 über die Verbindung 44 angesteuert und die Feldeffekttransistoren 41-43 über die Verbindung 45. Die Funktion der Schaltungsanordnung nach Fig. 2 wird im folgenden näher erläutert.

In der vorgegebenen Anwendung bildet das Netz N1 ein 36V (Nennspannung) bzw. 42V (Ladespannung) Spannungsnetz für Verbraucher, die eine höhere Leistungsaufnahme aufweisen und das Netz N2 ein 12V (Nennspannung) bzw. 14V (Ladespannung) Spannungsnetz für Verbraucher mit niedriger Leistungsaufnahme. Es sind auch andere Spannungsklassen denkbar, prinzipiell könnten die Spannungen der Netze N1 und N2 auch gleich sein. Eine Erweiterung auf n Netze ist ebenfalls möglich.

Da die elektrische Maschine 10a sowohl als Motor als auch als Generator betrieben werden kann, ist zu unterscheiden zwischen Motorbetrieb und Generatorbetrieb. Der Motorbetrieb dient dazu, nach dem Anlassen der Brennkraftmaschine diese auf die gewünschte Startdrehzahl zu bringen. Der Motorbetrieb entspricht also dem Starterbetrieb. Im Motorbetrieb erfolgt die Steuerung der elektrischen Maschine als Synchron/Asynchronmotor. Die steuerbaren Gleichrichter der Gruppe G1 und G2 bilden im Motorbetrieb den steuerbaren Wechselrichter, der die elektrische Maschine aus dem Netz N1 mit Energie versorgt. Zum Netz N1 gehört die Batterie 34.

Im Generatorbetrieb, nachdem die Brennkraftmaschine des Fahrzeugs die Startdrehzahl erreicht hat, werden mit derselben elektrischen Maschine 10a im Generatorbetrieb zwei unabhängige Batterienetze N1 und N2 geladen. Dazu bilden die gesteuerten Gleichrichtergruppen G1 und G2 im Generatorbetrieb den steuerbaren Gleichrichter für die Ladung des Netzes N1. Die Gruppen G1 und G3 bilden im Generatorbetrieb den steuerbaren Gleichrichter für die Ladung des Netzes N2.

Die Gruppe G3 der steuerbaren Gleichrichterelemente kann entweder so aufgebaut sein, wie es in Fig. 2 dargestellt ist, und je einen Feldeffekttransistor pro Phase umfassen, wobei die Anode der parasitären Diode an der jeweiligen Phase angeschlossen ist und die Kathoden der parasitären Diode gemeinsam mit einem dazu in Reihe geschalteten Feldeffekttransistor als steuerbares Stellglied legen oder es kann je eine Diode pro Phase vorhanden sein, wobei die Anode an der jeweiligen Phase liegt und die Kathoden gemeinsam mit einem dazu in Reihe geschalteten Feldeffekttransistor als steuerbarem Stellglied legen.

Bei dem im Generatorbetrieb erforderlichen Regelvorgang werden für das in Figur 2 dargestellte Ausführungsbeispiel Verläufe der Phasenspannungen, der Leiterspannungen und der Leiterströme erhalten, wie sie in Fig. 3 dargestellt sind. Im einzelnen zeigt Fig. 3 Strom-Spannungsverläufe bei Speisung eines Dreiphasengenerators mit den Phasenspannungen UU, UV, UW über je einen gesteuerten Gleichrichter in zwei Netze mit den Nennspannungen 12V und 36V. In Fig. 3 sind dabei die Phasenspannungen UU, UV und UW, die Leiterspannungen UU-V, UV-W und UW-U sowie die Leiterströme I12UV, I12VW und I12WU im 12V-Netz und die Leiterströme I36UV, I36VW und I36WU im 36V-Netz über dem Phasenwinkel dargestellt. Die einzelnen Bezeichnungen sind der Figur zu entnehmen.

Die Steuer- und Regeleinheit hat folgende Aufnahmen zu übernehmen: die Leistungsschalter der Stellglieder der Gruppen G1, G2 und G3 der steuerbaren Gleichrichter und des Stellgliedes 12, das dem Regeltransistor für die Erregersteuerung des Generators entspricht, sind Phasensynchron so zu schalten, daß sich die vorgegebenen Spannungswerte Netz N1 und Netz N2 unabhängig von der jeweiligen Netzbelastung und der Generatordrehzahl einstellen. Bei der gewählten Schaltungsanordnung liefert das Netz N1 den hohen Spannungspegel und das Netz N2 den niederen Spannungspegel. Für die Speisung der einzelnen Netze gilt dann:
Speisung Netz 1:
   Während die jeweilige Leiterspannung UU-V, UV-W, UW-U kleiner als die aktuelle Spannung des Netzes 1 aber höher als die des Netzes N2 ist, erfolgt bei Bedarf über die Gruppe G2 und G3 eine Speisung in das Netz N2.
Speisung Netz 1:
   Wenn die jeweilige Leiterspannung den aktuellen Spannungspegel in Netz N1 übersteigt, erfolgt eine Speisung in Netz N1. Die Halbleiterschalter (beispielsweise MOS-Feldeffekttransistoren) der Gruppen G1 und G2 werden bei Stromfluß im entsprechenden Leiter zur Reduzierung Verlustleistung eingeschaltet. Die Halbleiterschalter der Gruppe G3 zur Speisung im Netz N2 sind in diesem Fall gesperrt, der Strom, der ins Netz N2 fließt ist somit 0.

Die Erregung der als Generator arbeitenden elektrischen Maschine wird durch die Steuer- und Regeleinheit, also den Spannungsregler 13 in Verbindung mit dem Regeltransistor 12 entsprechend dem Energiebedarf in das Netz N1 eingestellt. Dazu schaltet der Spannungsregler 13 den Regeltransistor 12 getaktet ein bzw. aus, unter Berücksichtigung der eingestellten Sollspannung sowie der zugeführten Istspannung, die gemäß dem Ausführungsbeispiel nach Fig. 2 über die Verbindung 28 zum Spannungsregler 13 gelangt.

Bei Unterversorgung des Netzes N1, wenn trotz maximaler Erregung des Generators von diesem nicht genügend elektrische Energie zur Versorgung des Netzes N1 bereitgestellt werden kann, kann durch getaktetes Ansteuern des Netzes N2 die dabei in der Induktivität der Statorwicklung (U, V, W) gespeicherte Energie nach Abschalten der Gruppe G3 in das Netz N1 eingespeist werden. In der Praxis bedeutet dies im Kraftfahrzeug, daß im Falle niederer Motordrehzahl, beispielsweise im Leerlaufbetrieb, in dem die Generatorspannung für eine Speisung des Spannungsnetzes N1 nicht ausreicht die durch getaktetes Ansteuern des Netzes N2 anfallende Freilaufenergie in das Netz N1 eingespeist werden kann.

## Patentansprüche

1. Mehrspannungsbordnetz für ein Fahrzeug, mit einem Generator (10) und einem Spannungsregler (13), der die Ausgangsspannung des Generators (10) durch Beeinflussung des durch die Erregerwicklung (E) fließenden Stromes auf vorgebbare Werte regelt, mit wenigstens zwei dem Generator (10) nachgeschalteten Gleichrichteranordnungen, wobei die erste Gleichrichteranordnung (14) zu einem ersten Anschluß (B1+) führt, an dem eine erste Gleichspannung UB1+ entsteht und die zweite Gleichrichteranordnung (21) an einen zweiten Anschluß (B2+) führt, an dem eine zweite höhere Gleichspannung (UB2+) liegt, **dadurch gekennzeichnet, daß** die erste Gleichrichteranordnung (14) als steuerbarer Gleichrichter mit wenigstens sechs steuerbaren Gleichrichterelementen (15-20) aufgebaut ist, wobei jeweils zwei zueinander in Reihe liegen und zwischen jeweils einer Phasenwicklung und dem Anschluß (B1+) geschaltet sind.

2. Mehrspannungsbordnetz nach Anspruch 1, **dadurch gekennzeichnet, daß** die gesteuerten Gleichrichterelemente MOS-Feldeffekttransistoren sind, die jeweils vom Spannungsregler (13) angesteuert werden.

3. Mehrspannungsbordnetz nach Anspruch 1 oder 2, **dadurch gekennzeichnet, daß** der Spannungsregler (13) den Regeltransistor (12) so ansteuert, daß ein Erregerstrom (IE) fließt, der am Anschluß (B2+) eine Spannung von 36 bzw. 42V entstehen läßt und daß der Regler 13 die steuerbaren Gleichrichter (14) gleichzeitig so ansteuert, daß am Anschluß B1+ eine Spannung von 12V bzw. 14V entsteht.

4. Bordnetz nach einem der vorhergehenden Ansprüche, **dadurch gekennzeichnet, daß** am Anschluß (B1+) eine Batterie (37) anschließbar ist und über wenigstens einen Schalter (35) wenigstens ein 12V-Bordnetzverbraucher (36) zuschaltbar ist und daß am Anschluß B2+ über wenigstens einen Schalter (32) Verbraucher (33) zuschaltbar sind, die eine höhere Leistungsaufnahme aufweisen und gegebenenfalls eine weitere Batterie (34) an den Anschluß (B2+) anschließbar ist.

5. Mehrspannungsbordnetz nach einem der vorhergehenden Ansprüche, **dadurch gekennzeichnet, daß** der Generator (10) eine elektrische Maschine (10a) ist, die als Motor oder als Generator betreibbar ist, wobei der Motorbetrieb zum Starten einer Brennkraftmaschine dient und der Generatorbetrieb nach dem Start der Brennkraftmaschine erfolgt und sowohl der Motor- als auch der Generatorbetrieb unter Verwendung steuerbarer Gleichrichterelemente erfolgt.

6. Mehrspannungsbordnetz nach Anspruch 5, **dadurch gekennzeichnet, daß** im Motorbetrieb die elektrische Maschine (10a) als Synchron- oder Asynchronmotor läuft und die Gruppe (G1) und die Gruppe (G2) der steuerbaren Gleichrichter als steuerbare Wechselrichter wirken und die elektrische Maschine aus der Batterie (34) mit Spannung versorgen.

7. Mehrspannungsbordnetz nach Anspruch 5 oder 6, **dadurch gekennzeichnet, daß** im Generatorbetrieb die steuerbaren Gleichrichter der Gruppe (G1) und (G2) zur Ladung des Netzes (N1) dienen und die Gruppe (G1) und (G3) zur Ladung für das Netz (N2).

8. Mehrspannungsbordnetz nach einem der vorhergehenden Ansprüche, **dadurch gekennzeichnet, daß** die Gleichrichterelemente der Gruppe (G3) jeweils eine Diode pro Phasenwicklung des Generators umfassen, deren Anode an der jeweiligen Phasenwicklung angeschlossen ist und deren Kathoden gemeinsam mit einem dazu in Reihe geschalteten Feldeffekttransistor als steuerbares Stellglied zusammenwirken.

9. Mehrspannungsbordnetz nach Anspruch 5 oder 6, **dadurch gekennzeichnet, daß** die Gleichrichterelemente (G3) jeweils einen Feldeffekttransistor pro Phasenwicklung umfassen, daß die Anode der parasitären Diode des Feldeffekttransistors an der jeweiligen Phasenwicklung angeschlossen ist und die Kathoden der parasitären Diode gemeinsam mit einem dazu in Reihe geschalteten Feldeffekttransistor als steuerbares Stellglied zusammenwirken.

10. Mehrspannungsbordnetz nach einem der vorhergehenden Ansprüche, **dadurch gekennzeichnet, daß** der Regler die steuerbaren Gleichrichter der Gruppe (G1, G2, G3) und den Regeltransistor (12) für die Erregungssteuerung des Generators phasensynchron so schaltet, daß sich die vorgegebenen Spannungswerte am Netz (N1) und am Netz (N2) unabhängig von der jeweiligen Netzlast und der Generatordrehzahl einstellen.

11. Mehrspannungsbordnetz nach einem der vorhergehenden Ansprüche, **dadurch gekennzeichnet, daß** die Speisung des Spannungsnetzes (N1) und des Spannungsnetzes (N2) unabhängig voneinanander einstellbar ist.

12. Mehrspannungsbordnetz nach Anspruch 11, **dadurch gekennzeichnet, daß** bei Unterversorgung des Spannungsnetzes (1) trotz maximaler Erregung des Generators eine getaktete Ansteuerung der auf das Netz (N2) wirkenden Gleichrichterelemente erfolgt und die **dadurch** in der Starterwicklung des Generators gespeicherte Energie in das Netz (N1) eingespeist wird.

## Claims

1. Multi-voltage on-board electrical system for a vehicle, having a generator (10) and a voltage regulator (13) which adjusts the output voltage of the generator (10) to predefinable values by influencing the current flowing through the exciter winding (E), having at least two rectifier arrangements which are connected downstream of the generator (10), wherein the first rectifier arrangement (14) leads to a first terminal (B1+) at which a first direct voltage (UB1+) occurs, and the second rectifier arrangement (21) leads to a second terminal (B2+) at which a second higher direct voltage (UB2+) is present, **characterized in that** the first rectifier arrangement (14) is constructed as a controllable rectifier with at least six controllable rectifier elements (15-20), wherein in each case two are connected in series with one another, between in each case a phase winding and the terminal (B1+).

2. Multi-voltage on-board electrical system according to Claim 1, **characterized in that** the controlled rectifier elements are MOS field-effect transistors which are each actuated by the voltage regulator (13).

3. Multi-voltage on-board electrical system according to Claim 1 or 2, **characterized in that** the voltage regulator (13) actuates the regulating transistor (12) in such a way that an exciter current (IE) flows and causes a voltage of 36 V or 42 V to occur at the terminal (B2+), and **in that** the regulator (13) simultaneously actuates the controllable rectifiers (14) in such a way that a voltage of 12 V or 14 V occurs at the terminal (B1+).

4. Multi-voltage on-board electrical system according to one of the preceding claims, **characterized in that** a battery (37) can be connected to the terminal (B1+) and at least one 12 V on-board electrical system load (36) can be connected via at least one switch (35), and **in that** loads (33) which have a relatively high power drain can be connected to the terminal (B2+) via at least one switch (32), and if appropriate a further battery (34) can be connected to the terminal (B2+).

5. Multi-voltage on-board electrical system according to one of the preceding claims, **characterized in that** the generator (10) is an electric machine (10a) which can be operated as a motor or as a generator, wherein the motor mode is used to start an internal combustion engine, and the generator mode is carried out after the internal combustion engine has started, and both the motor mode and the generator mode are carried out using controllable rectifier elements.

6. Multi-voltage on-board electrical system according to Claim 5, **characterized in that** in the motor mode the electric machine (10a) runs as a synchronous motor or asynchronous motor, and the group (G1) and the group (G2) of controllable rectifiers act as controllable power inverters and supply the electric machine with voltage from the battery (34).

7. Multi-voltage on-board electrical system according to Claim 5 or 6, **characterized in that** in the generator mode the controllable rectifiers of the groups (G1) and (G2) are used to charge the system (N1), and the groups (G1) and (G3) are used to charge the system (N2).

8. Multi-voltage on-board electrical system according to one of the preceding claims, **characterized in that** the rectifier elements of the group (G3) each comprise one diode per phase winding of the generator, the anode of which diode is connected to the respective phase winding and the cathodes of which jointly interact with a field-effect transistor, connected in series with said diode, as a controllable actuator element.

9. Multi-voltage on-board electrical system according to Claim 5 or 6, **characterized in that** the rectifier elements (G3) each comprise one field-effect transistor per phase winding, **in that** the anode of the parasitic diode of the field-effect transistor is connected to the respective phase winding, and the cathodes of the parasitic diode jointly interact with a field-effect transistor, connected in series with said diode, as a controllable actuator element.

10. Multi-voltage on-board electrical system according to one of the preceding claims, **characterized in that** the regulator connects the controllable rectifiers of the group (G1, G2, G3) and the regulating transistor (12) for controlling the excitation of the generator with synchronous phases in such a way that the predefined voltage values at the system (N1) and at the system (N2) are set independently of the respective system load and the rotational speed of the generator.

11. Multi-voltage on-board electrical system according to one of the preceding claims, **characterized in that** the supply to the voltage system (N1) and the supply to the voltage system (N2) can be set independently of one another.

12. Multi-voltage on-board electrical system according to Claim 11, **characterized in that** when there is an undersupply of the voltage system (1) despite maximum excitation of the generator, the rectifier elements which act on the system (N2) are actuated in a clocked fashion and the energy which is as a result stored in the starter winding of the generator is fed into the system (N1).

## Revendications

1. Réseau de bord à tension multiple de véhicule comportant un générateur (10) et un régulateur de tension (13) qui régule la tension de sortie du générateur (10) en influençant le courant alimentant l'enroulement d'excitation (E) selon des valeurs prédéfinies, comprenant au moins deux dispositifs redresseurs en aval du générateur (10), le premier dispositif redresseur (14) étant relié à une première borne (B1+) donnant la première tension continue (UB1+) et le second dispositif redresseur (21) étant relié à une seconde borne (B+) fournissant la seconde tension continue plus élevée (UB2+),
**caractérisé en ce que**
le premier dispositif redresseur (14) est un redresseur commandé ayant au moins six éléments redresseurs commandés (15-20), et chaque fois deux des éléments sont en série et sont branchés chacun entre un enroulement de phase et le branchement (B1+).

2. Réseau de bord à tension multiple selon la revendication 1,
**caractérisé en ce que**
les éléments redresseurs commandés sont des transistors à effet de champ MOS commandés par le régulateur de tension (13).

3. Réseau de bord à tension multiple selon la revendication 1 ou 2,
**caractérisé en ce que**
le régulateur de tension (13) commande le transistor de régulation (12) pour avoir un courant d'excitation (IE) appliquant au branchement (B2+) une tension de 36V ou 42V et le régulateur (13) commande simultanément les redresseurs commandés (14) pour obtenir une tension de 12V ou de 14V sur le branchement (B1+).

4. Réseau de bord selon l'une des revendications précédentes,
**caractérisé en ce que**
le branchement (B1+) est relié à une batterie (37) et par au moins un commutateur (35) il est relié à au moins un utilisateur du réseau embarqué (36) à 12 V et
des utilisateurs (33) peuvent être branchés sur le branchement (B2+) par au moins un commutateur (32), utilisateur ayant une prise de puissance plus élevée, le cas échéant une autre batterie (34) reliée au branchement (B2+).

5. Réseau de bord à tension multiple selon l'une des revendications précédentes,
**caractérisé en ce que**
le générateur (10) est une machine électrique (10a) fonctionnant comme moteur ou comme générateur, le mode moteur servant à démarrer un moteur à combustion interne et le mode générateur étant utilisé après le démarrage du moteur à combustion interne, et à la fois le mode moteur et le mode générateur s'appliquent en utilisant des éléments redresseurs commandés.

6. Réseau de bord à tension multiple selon la revendication 5,
**caractérisé en ce qu'**
en mode moteur, la machine électrique (10a) fonctionne comme moteur synchrone ou comme moteur asynchrone et le groupe (G1) et le groupe (G2) des redresseurs commandés fonctionnent comme des onduleurs commandés, alimentant la machine électrique en tension à partir de la batterie (34).

7. Réseau de bord à tension multiple selon la revendication 5 ou 6,
**caractérisé en ce qu'**
en mode générateur, les redresseurs commandés du groupe (G1) et ceux du groupe (G2) servent à charger le réseau (N1) et les groupes (G1) et (G3) servent à charger le réseau (N2).

8. Réseau de bord à tension multiple selon l'une des revendications précédentes,
**caractérisé en ce que**
les éléments redresseurs du groupe (G3) comportent chacun une diode par enroulement de phase du générateur, dont l'anode est reliée à l'enroulement de phase respectif, les cathodes étant reliées en commun à un transistor à effet de champ branché en série et coopérant comme élément d'actionnement commandé.

9. Réseau de bord à tension multiple selon la revendication 5 ou 6,
**caractérisé en ce que**
les éléments redresseurs (G3) comprennent chacun un transistor à effet de champ par enroulement de phase,
l'anode de la diode parasite du transistor à effet de champ étant reliée à l'enroulement de phase respectif et les cathodes des diodes parasites étant reliées en commun à un transistor à effet de champ branché en série en coopérant comme organe d'actionnement commandé.

10. Réseau de bord à tension multiple selon l'une des revendications précédentes,
**caractérisé en ce que**
le régulateur branche les redresseurs commandés des groupes (G1, G2, G3) et le transistor de régulation (12) de la commande d'excitation du générateur en synchronisme de phase de façon que les valeurs de tension prédéfinies s'établissent sur le réseau (N1) et sur le réseau (N2) indépendamment de la charge respective appliquée au réseau et de la vitesse de rotation du générateur.

11. Réseau de bord à tension multiple selon l'une des revendications précédentes,
**caractérisé en ce que**
l'alimentation du réseau de tension (N1) et du réseau de tension (N2) se règle indépendamment l'une de l'autre.

12. Réseau de bord à tension multiple selon la revendication 11,
**caractérisé en ce qu'**
en cas de sous-alimentation du réseau de tension (1), malgré une excitation maximale du générateur, on a une commande cadencée des éléments redresseurs appliqués au réseau (N2) et l'énergie injectée dans l'enroulement de démarreur du générateur est fournie au réseau (N1).
